# EUROPEAN PATENT APPLICATION

(11) **EP 3 961 597 A2**
(43) Date of publication of application: **02.03.2022**
(21) Application number: 22151595.0
(22) Date of filing: 14.01.2022
(51) Int. Cl.: G08G 1/01, G08G 1/082

(54) **DATA VERIFICATION METHOD AND APPARATUS, DEVICE AND STORAGE MEDIUM**

(30) Priority: 03.06.2021 CN 202110620461
(71) Applicant: Apollo Intelligent Connectivity (Beijing) Technology Co., Ltd., Beijing 100176 (CN)
(72) Inventor: Shi, Lintao, BEIJING, 100176 (CN); Qu, Hailong, BEIJING, 100176 (CN); Mei, Yu, BEIJING, 100176 (CN); Yan Tao, BEIJING, 100176 (CN); Dou, Xiaoqin, BEIJING, 100176 (CN); Wu, Wushuai, BEIJING, 100176 (CN)
(74) Representative: Regimbeau

(57) **Abstract**

A data verification method includes that the actual value of an evaluation indicator of the timing coordination data of intersection traffic lights on a green-wave coordinated trunk is determined (S101, S201, S301, S401), where evaluation indicator includes at least one of an intersection stop rate indicator, a road section speed indicator, a trunk speed indicator, or a trunk stop count indicator; the theoretical value of the evaluation indicator is determined (S102) based on the timing coordination data of the intersection traffic lights on the green-wave coordinated trunk, intersection location data, and the trajectory data of vehicles running on the green-wave coordinated trunk; and the reasonability of the timing coordination data of the intersection traffic lights on the green-wave coordinated trunk is verified (S103, S204, S304, S405) based on the theoretical value of the evaluation indicator and the actual value of the evaluation indicator.

## Description

### TECHNICAL FIELD

The present disclosure relates the field of computer technology, particularly to artificial intelligence technology including intelligent transportation, and specifically to a data verification method and apparatus, a device, and a storage medium.

### BACKGROUND

With the development of intelligent transportation technology, arterial green-wave coordination technology has been applied and promoted to various cities and regions to solve the problem of road congestion. In the arterial green-wave coordination technology, the switching time of traffic lights is dynamically changing.

Whether the evaluation of the dynamic time of traffic lights is reasonable is vital for whether the problem of congestion is really solved.

### SUMMARY

The present disclosure provides a data verification method and apparatus, a device, and a storage medium.

According to one aspect of the present disclosure, a data verification method is provided. The method includes the steps below.

The actual value of an evaluation indicator of the timing coordination data of intersection traffic lights on a green-wave coordinated trunk is determined. The evaluation indicator includes at least one of an intersection stop rate indicator, a road section speed indicator, a trunk speed indicator, or a trunk stop count indicator.

The theoretical value of the evaluation indicator is determined based on the timing coordination data of the intersection traffic lights on the green-wave coordinated trunk, location data of intersections on the green-wave coordinated trunk, and the trajectory data of a vehicle running on the green-wave coordinated trunk.

The reasonability of the timing coordination data of the intersection traffic lights on the green-wave coordinated trunk is verified based on the theoretical value of the evaluation indicator and the actual value of the evaluation indicator.

According to another aspect of the present disclosure, a data verification apparatus is provided. The apparatus includes an actual value determination module, a theoretical value determination module, and a verification module.

The actual value determination module is configured to determine the actual value of an evaluation indicator of the timing coordination data of intersection traffic lights on a green-wave coordinated trunk. The evaluation indicator includes at least one of an intersection stop rate indicator, a road section speed indicator, a trunk speed indicator, or a trunk stop count indicator.

The theoretical value determination module is configured to determine the theoretical value of the evaluation indicator based on the timing coordination data of the intersection traffic lights on the green-wave coordinated trunk, location data of intersections on the green-wave coordinated trunk, and the trajectory data of a vehicle running on the green-wave coordinated trunk.

The verification module is configured to verify the reasonability of the timing coordination data of the intersection traffic lights on the green-wave coordinated trunk based on the theoretical value of the evaluation indicator and the actual value of the evaluation indicator.

According to another aspect of the present disclosure, an electronic device is provided. The electronic device includes at least one processor and a memory.

The memory is communicatively connected to the at least one processor.

The memory stores instructions executable by the at least one processor. The instructions are executed by the at least one processor to cause the at least one processor to execute the data verification method according to any embodiment of the present disclosure.

According to another aspect of the present disclosure, a non-transitory computer-readable storage medium is provided. The storage medium stores computer instructions for causing a computer to execute the data verification method according to any embodiment of the present disclosure.

According to another aspect of the present disclosure, a computer program product is provided. The computer program product includes a computer program which, when executed by a processor, causes the processor to implement the data verification method according to any embodiment of the present disclosure.

The technology of the present disclosure provides an optimized new idea of verifying the reasonability of the timing coordination data.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present disclosure.
FIG. 1A is a flowchart of a data verification method according to embodiments of the present disclosure.
FIG. 1B is an arterial green wave diagram according to embodiments of the present disclosure.
FIG. 1C is a trajectory-green-wave diagram according to embodiments of the present disclosure.
FIG. 2 is a flowchart of another data verification method according to embodiments of the present disclosure.
FIG. 3A is a flowchart of another data verification method according to embodiments of the present disclosure.
FIGS. 3B to 3D are each a diagram of intersection scenarios according to embodiments of the present disclosure.
FIG. 4A is a flowchart of another data verification method according to embodiments of the present disclosure.
FIG. 4B a diagram of arterial intersection scenarios according to embodiments of the present disclosure.
FIG. 5 is a diagram illustrating the structure of a data verification apparatus according to embodiments of the present disclosure.
FIG. 6 is a block diagram of an electronic device for performing a data verification method according to embodiments of the present disclosure.

### DETAILED DESCRIPTION

Example embodiments of the present disclosure, including details of embodiments of the present disclosure, are described hereinafter in conjunction with the drawings to facilitate understanding. The example embodiments are merely illustrative. Description of well-known functions and constructions is omitted hereinafter for clarity and conciseness.

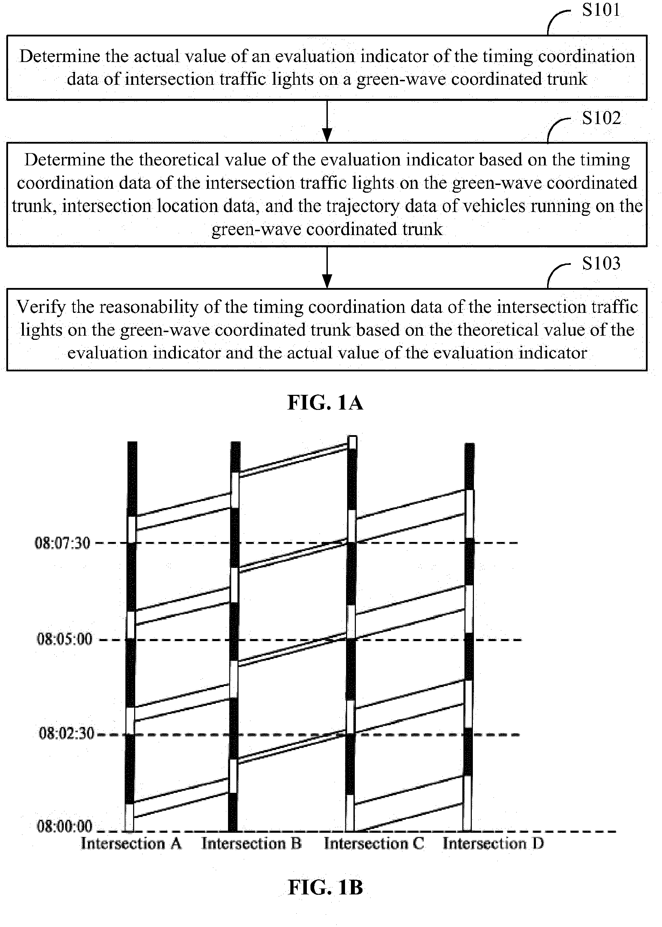

FIG. 1A is a flowchart of a data verification method according to embodiments of the present disclosure. Embodiments of the present disclosure are suitable for verifying the reasonability of the timing coordination data of intersection traffic lights on a green-wave coordinated trunk, that is, for verifying the reasonability of a green wave belt provided for the green-wave coordinated trunk. The green-wave coordinated trunk is any road in an actual scenario. All the intersection traffic lights on the road are controlled uniformly with the adoption of arterial green-wave coordination technology. A green wave belt is constituted by intersection sets of durations in which the intersection traffic lights between road sections stay green. The method may be performed by a data verification apparatus. The apparatus may be implemented by software and/or hardware and may be integrated into a computing device carrying a data verification function. As shown in FIG. 1A, the data verification method provided in this embodiment may include the steps below.

In S101, the actual value of an evaluation indicator of the timing coordination data of the intersection traffic lights on the green-wave coordinated trunk is determined.

In this embodiment, an intersection traffic light is a traffic light (also referred to as a red or green light) located at an intersection (for example, a crossroad). The timing coordination data is the data for uniformly controlling the traffic lights and may include the period of the traffic light at any intersection on the green-wave coordinated trunk, the duration of the green wave, and the phase difference between traffic lights at two adjacent intersections on the green-wave coordinated trunk.

Optionally, the evaluation indicator is used for verifying (alternatively, evaluating or appraising) the reasonability of the timing coordination data of the intersection traffic lights on the green-wave coordinated trunk. Further, the indicator in this embodiment may include at least one of, for example, an intersection stop rate indicator, an intersection queuing count indicator, a road section speed indicator, a trunk speed indicator, a trunk stop count indicator, and an indicator of the degree of coincidence.

The intersection stop rate indicator is a means for counting the probability of stopping at an intersection. The intersection stop rate indicator is a ratio of the number of vehicles needing to stop to the total number of vehicles (that is, vehicles running from an upstream intersection to a downstream intersection) when the vehicles from the upstream intersection pass through the downstream intersection, where the upstream intersection and the downstream intersection are two adjacent intersections. The upstream intersection and the downstream intersection are relative to the running direction of a vehicle. The intersection where the vehicle passes first is the upstream intersection, and the intersection where the vehicle passes later is the downstream intersection. The intersection queuing count is the number of vehicles queuing at an intersection and waiting to pass through the intersection. Correspondingly, the trunk stop count indicator is a means for counting the probability of stopping from the perspective of the trunk. The trunk stop count is the average number of stops for vehicles from the starting intersection on the trunk passing through the ending intersection on the trunk.

The road section speed indicator is a means for counting vehicle speeds from the perspective of a road section. The road section speed is the average speed of vehicles from an upstream intersection passing through a downstream intersection. Correspondingly, the trunk speed indicator is a means for counting vehicle speeds from the perspective of the trunk. The trunk speed is the average running speed of the vehicles from the starting intersection on the trunk passing through the ending intersection on the trunk. Further, the indicator of the degree of coincidence is an indicator for characterizing the degree of coincidence between a green wave belt on the green-wave coordinated trunk and vehicle trajectories.

Exemplarily, in this embodiment, in the case of a need for verifying the timing coordination data of intersection traffic lights on any green-wave coordinated trunk, the actual value of the evaluation indicator of the timing coordination data of the intersection traffic lights on the green-wave coordinated trunk may be acquired from a back-end server of a map application. The actual value of the evaluation indicator may be acquired in other manners. For example, the actual value of the indicator of the queuing number at an intersection may be determined through a scenario image collected by a collection device configured at the intersection. Alternatively, the trajectory data of vehicles running on the green-wave coordinated trunk may be acquired from the map application, and the actual value of the intersection stop rate indicator may be determined based on, for example, the acquired trajectory data and location data of the intersections. Specifically, the vehicle trajectories may be plotted based on the acquired trajectory data, and the actual value of the intersection stop rate indicator is determined in combination with the plotted trajectories and the location data of the intersections. Alternatively, running durations of running vehicles in any road section of the green-wave coordinated trunk and the length of the road section may be acquired based on the map application, and thus the actual value of the indicator of the speed in the road section may be determined. For example, the speed of each vehicle may be acquired by dividing the length of the road section by the running duration of each vehicle running in the road section, and the actual value of the road section speed indicator may be acquired by averaging speeds of all the vehicles.

Further, in an actual scenario, green wave control is usually performed for the trunk in a period-based manner. For example, the intersection traffic lights on the trunk are controlled during the morning and evening peak hours but are not controlled in other periods. Moreover, any one of the periods in which the intersection traffic lights on the green-wave coordinated trunk are controlled may be selected so that the actual value of the evaluation indicator of the timing coordination data of the intersection traffic lights on the green-wave coordinated trunk is acquired for the selected period. Optionally, to guarantee the accuracy, the duration of the selected period should be within a set value range. The set value range may be pre-determined based on, for example, the length of the green-wave coordinated trunk in the actual scenario and single or double lanes.

Additionally, it is to be understood that in this embodiment, both the actual value of the evaluation indicator of a historical record and the actual value of the evaluation indicator at the current moment may be acquired.

In S102, the theoretical value of the evaluation indicator is determined based on the timing coordination data of the intersection traffic lights on the green-wave coordinated trunk, the location data of the intersections on the green-wave coordinated trunk, and the trajectory data of the vehicle running on the green-wave coordinated trunk.

Optionally, in this embodiment, the location data of all the intersections on the green-wave coordinated trunk may be acquired from the map application; further, the location data of any intersection may include coordinates of the intersection. Moreover, the trajectory data of the vehicles running on the green-wave coordinated trunk may be acquired from the map application. In this embodiment, the vehicles running on the green-wave coordinated trunk are preferably all the vehicles running on the green-wave coordinated trunk.

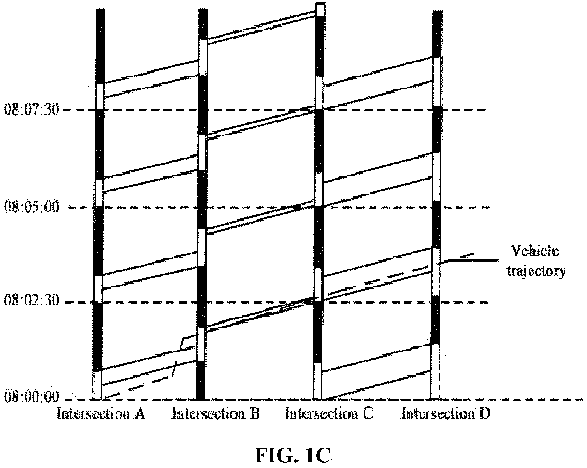

Exemplarily, an optional implementation of determining the theoretical value of the evaluation indicator is to plot an arterial green wave diagram based on the timing coordination data of the intersection traffic lights on the green-wave coordinated trunk and the location data of the intersections. For example, as shown in FIG. 1B, a region of an intersection filled with black indicates a duration in which the traffic light at this intersection is steady red, and an unfilled region indicates a duration in which the traffic light at this intersection is steady green. Intersection sets of durations in which the intersection traffic lights between road sections stay green constitute a green wave belt. Moreover, FIG. 1B is an arterial green wave diagram of a one-way trunk. An arterial green wave diagram of a two-way trunk is also included in this embodiment. The acquired trajectory data is processed so that longitude-latitude coordinates of trajectory points are converted to the displacement data varying with time. The processed data is plotted in the arterial green wave diagram so as to obtain a trajectory-green-wave diagram, for example, as shown in FIG. 1C. In this embodiment, a plurality of vehicles are on the green-wave coordinated trunk, thus resulting in a plurality of related trajectories. FIG. 1C only illustrates the trajectory of one vehicle exemplarily, which is not limited here. A plurality of sub-diagrams are obtained by dividing the obtained trajectory-green-wave diagram (for example, a diagram between two adjacent intersections is taken as a sub-diagram). For each sub-diagram, a scenario diagram matching a sub-diagram is selected from the preset scenario diagrams of running between two adjacent intersections; the numerical value of the intersection stop rate indicator corresponding to the selected scenario diagram is taken as the theoretical value of the intersection stop rate indicator corresponding to the sub-diagram; and the numerical value of the road section speed indicator corresponding to the selected scenario diagram is taken as the theoretical value of the road section speed indicator corresponding to the sub-diagram. Here various scenario diagrams of running between two adjacent intersections are plotted based on the timing coordination data of the intersection traffic lights on the green-wave coordinated trunk, the location data of the intersections, and the assumption that vehicles are running in every second.

Further, the plotted trajectory-green-wave diagram may be matched with a preset trajectory-green-wave diagram related to the green-wave coordinated trunk. Then as for the numerical value of the evaluation indicator corresponding to the matched trajectory-green-wave diagram, for example, the numerical value of the trunk stop count indicator is taken as the theoretical value of the indicator of the trunk stop count indicator, and the numerical value of the indicator of the degree of coincidence is taken as the theoretical value of the indicator of the degree of coincidence.

Exemplarily, the theoretical value of the evaluation indicator may also be determined in other manners. For details, refer to the embodiments hereinafter.

In S103, the reasonability of the timing coordination data of the intersection traffic lights on the green-wave coordinated trunk is verified based on the theoretical value of the evaluation indicator and the actual value of the evaluation indicator.

Optionally, after the theoretical value of the evaluation indicator and the actual value of the evaluation indicator are determined, a comparison may be made between the theoretical value of the evaluation indicator and the actual value of the evaluation indicator. If the difference between the actual value of any evaluation indicator and the theoretical value of the evaluation indicator is within a set range, it is determined that the timing coordination data of the intersection traffic lights on the green-wave coordinated trunk is reasonable. On the contrary, if the difference between the theoretical value of any evaluation indicator and the actual value of the evaluation indicator is not within the set range, it is determined that the timing coordination data of the intersection traffic lights on the green-wave coordinated trunk is unreasonable; that is, a green wave belt provided for the green-wave coordinated trunk is unreasonable.

Further, for ease of directly judging whether the timing coordination data of the intersection traffic lights is reasonable, in the plotted trajectory-green-wave diagram in this embodiment, green is used for indicating the coincidence of the vehicle trajectory and the green wave, and red is used for indicating that the vehicle waits for a green light. Moreover, a user is provided with the theoretical value of the evaluation indicator, the actual value of the evaluation indicator, and the trajectory-green-wave diagram. Additionally, if the difference between the actual value of the evaluation indicator and the theoretical value of the evaluation indicator is not within the set range, the actual value of the evaluation indicator may be highlighted to enable the user to perform positioning intuitively.

Exemplarily, if it is determined that the timing coordination data of the intersection traffic lights on the green-wave coordinated trunk is unreasonable, a related adjustment recommendation may be provided. For example, if the actual value of the intersection stop rate indicator is much greater than the theoretical value of the indicator, it may be recommended that the duration in which the intersection traffic lights are steady green is prolonged; that is, a green wave belt between intersections is broadened.

According to the technical solutions provided in embodiments of the present disclosure, the theoretical value of the evaluation indicator is determined based on the timing coordination data of the intersection traffic lights on the green-wave coordinated trunk, the location data of the intersections on the green-wave coordinated trunk, and the trajectory data of the vehicle running on the green-wave coordinated trunk. Moreover, the reasonability of the timing coordination data of the intersection traffic lights on the green-wave coordinated trunk is verified based on the theoretical value of the evaluation indicator and the acquired actual value of the evaluation indicator. In the preceding solution, the timing coordination data is evaluated thoroughly from three perspectives, intersections, road sections, and the trunk so as to determine the reasonability of the timing coordination data of the intersection traffic lights intuitively, truthfully, and accurately. Moreover, this solution is based on the trajectory data of all the vehicles running on the green-wave coordinated trunk, that is, based on an abundant amount of data, which greatly improves the accuracy of determining the reasonability of the timing coordination data of the intersection traffic lights and provides an optimized new idea of verifying the reasonability of the timing coordination data.

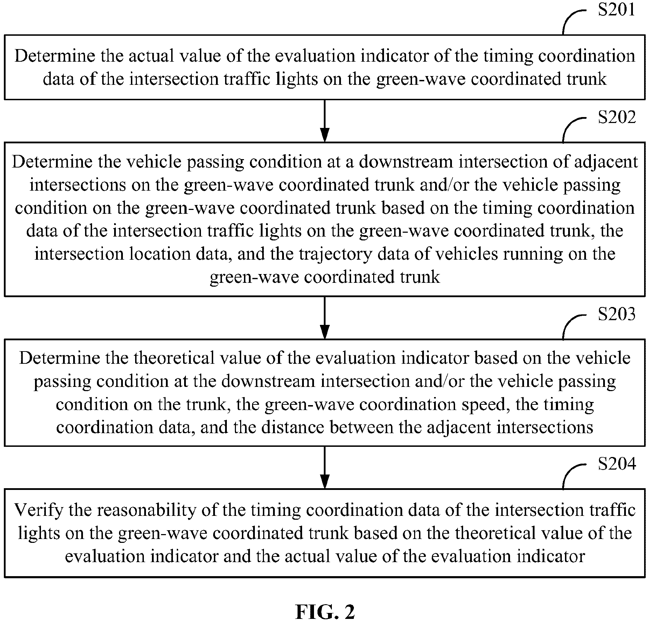

FIG. 2 is a flowchart of another data verification method according to embodiments of the present disclosure. Based on the preceding embodiment, embodiments of the present disclosure make further descriptions on how to determine the theoretical value of the evaluation indicator. As shown in FIG. 2, the data verification method provided in this embodiment may include the steps below.

In S201, the actual value of the evaluation indicator of the timing coordination data of the intersection traffic lights on the green-wave coordinated trunk is determined.

The evaluation indicator includes at least one of the intersection stop rate indicator, the road section speed indicator, the trunk speed indicator, or the trunk stop count indicator.

In S202, the vehicle passing condition at a downstream intersection of adjacent intersections on the green-wave coordinated trunk and/or the vehicle passing condition on the green-wave coordinated trunk are determined based on the timing coordination data of the intersection traffic lights on the green-wave coordinated trunk, the location data of the intersections on the green-wave coordinated trunk, and the trajectory data of the vehicle running on the green-wave coordinated trunk.

In this embodiment, the vehicle passing condition at the downstream intersection of the adjacent intersections is the vehicle passing condition counted from the perspective of intersections, that is, the passing condition of the vehicles running from the upstream intersection to the downstream intersection. Specifically, the vehicle passing condition at the downstream intersection may be that vehicles needing to wait, at the downstream intersection, to pass exists among vehicles running from the upstream intersection to the downstream intersection; alternatively, the vehicle passing condition may be that no vehicle needing to wait, at the downstream intersection, to pass exists among vehicles running from the upstream intersection to the downstream intersection. Correspondingly, the vehicle passing condition on the trunk is the vehicle passing condition counted from the perspective of the trunk, that is, the passing condition of the vehicles running from the starting intersection on the green-wave coordinated trunk to the ending intersection on the green-wave coordinated trunk. Specifically, for the vehicles running on the green-wave coordinated trunk, the vehicle passing condition may be that vehicles wait to passing or may be that no vehicle waits to pass.

Optionally, an arterial green wave diagram is plotted based on the timing coordination data of the intersection traffic lights on the green-wave coordinated trunk and the location data of the intersections on the green-wave coordinated trunk; the acquired trajectory data is processed so that longitude-latitude coordinates of trajectory points are converted to the displacement data varying with time; the processed data is plotted in the arterial green wave diagram so as to obtain a trajectory-green-wave diagram; and the trajectory-green-wave diagram is analyzed to obtain the vehicle passing condition at the downstream intersection of any two adjacent intersections on the green-wave coordinated trunk and/or the vehicle passing condition on the green-wave coordinated trunk.

In S203, the theoretical value of the evaluation indicator is determined based on the vehicle passing condition at the downstream intersection and/or the vehicle passing condition on the trunk, the green-wave coordination speed, the timing coordination data, and the distance between the adjacent intersections.

In this embodiment, the green-wave coordination speed is the design speed of the green-wave coordinated trunk and may also be referred to as an ideal speed. That is, in an ideal case, when driving at the green-wave coordination speed on the green-wave coordinated trunk, a user may encounter green lights all the way. The distance between the adjacent intersections is the distance between the upstream intersection and the downstream intersection, where the upstream intersection and the downstream intersection are two adjacent intersections. The distance between the adjacent intersections may be acquired directly from the map application or determined based on the location data of the intersections, which is not limited in this embodiment.

Optionally, the theoretical value of the intersection stop rate indicator, the theoretical value of the intersection queuing count, and the theoretical value of the road section speed indicator may be determined based on the vehicle passing condition at the downstream intersection, the green-wave coordination speed, the timing coordination data of the intersection traffic lights on the green-wave coordinated trunk, and the distance between the adjacent intersections. For example, when the vehicle passing condition at the downstream intersection is that vehicles needing to wait, at the downstream intersection, to pass exist among vehicles running from the upstream intersection to the downstream intersection, the average running duration in which the vehicles run from the upstream intersection to the downstream intersection may be determined based on the data related to the upstream intersection in the timing coordination data, the data related to the downstream intersection in the timing coordination data, the distance between the adjacent intersections, and the green-wave coordination speed; and the theoretical value of the road section speed indicator is obtained by dividing the distance between the adjacent intersections by the determined average running duration.

Further, the theoretical value of the trunk speed indicator, the theoretical value of the trunk stop count indicator, and the theoretical value of the indicator of the degree of coincidence may be determined based on the vehicle passing condition on the trunk, the green-wave coordination speed, the timing coordination data of the intersection traffic lights on the green-wave coordinated trunk, and the distance between the adjacent intersections. For example, the distance between the starting intersection on the green-wave coordinated trunk and the ending intersection on the green-wave coordinated trunk may be determined based on the distance between any two adjacent intersections on the green-wave coordinated trunk; thus the theoretical value of the trunk speed indicator may be determined based on the vehicle passing condition on the trunk, the green-wave coordination speed, the timing coordination data of the intersection traffic lights on the green-wave coordinated trunk, and the distance between the starting intersection on the green-wave coordinated trunk and the ending intersection on the green-wave coordinated trunk.

Further, the theoretical value of any evaluation indicator may be determined based on the vehicle passing condition at the downstream intersection, the vehicle passing condition on the trunk, the green-wave coordination speed, the timing coordination data of the intersection traffic light on the green-wave coordinated trunk, and the distance between the adjacent intersections.

In S204, the reasonability of the timing coordination data of the intersection traffic lights on the green-wave coordinated trunk is verified based on the theoretical value of the evaluation indicator and the actual value of the evaluation indicator.

According to the technical solutions provided in embodiments of the present disclosure, a thorough analysis is made thoroughly by introducing various types of data including the timing coordination data of the intersection traffic lights on the green-wave coordinated trunk, the location data of the intersections on the green-wave coordinated trunk, the trajectory data of the vehicles running on the green-wave coordinated trunk, and the green-wave coordination speed. Accordingly, the theoretical value of the evaluation indicator may be determined accurately from different perspectives including intersections, road sections, and the trunk, providing data support for subsequently verifying the reasonability of the timing coordination data. Then the verification on the reasonability of the timing coordination data of the intersection traffic lights on the green-wave coordinated trunk can be performed based on the theoretical value of the evaluation indicator and the acquired actual value of the evaluation indicator.

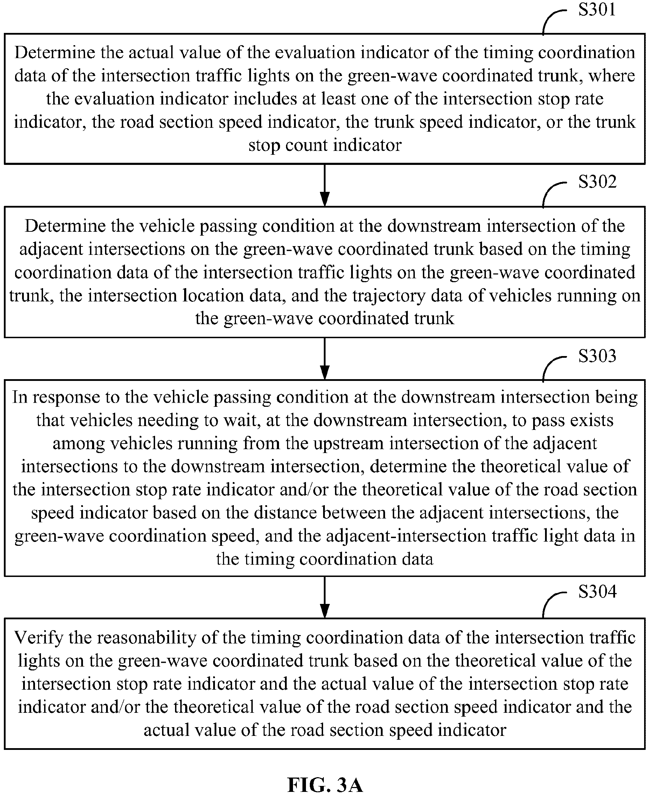

FIG. 3A is a flowchart of another data verification method according to embodiments of the present disclosure. Based on the preceding embodiments, embodiments of the present disclosure make further descriptions on how to determine the theoretical value of the evaluation indicator. As shown in FIG. 3A, the data verification method provided in this embodiment may include the steps below.

In S301, the actual value of the evaluation indicator of the timing coordination data of the intersection traffic lights on the green-wave coordinated trunk is determined. The evaluation indicator includes at least one of the intersection stop rate indicator, the road section speed indicator, the trunk speed indicator, or the trunk stop count indicator.

In S302, the vehicle passing condition at the downstream intersection of the adjacent intersections on the green-wave coordinated trunk is determined based on the timing coordination data of the intersection traffic lights on the green-wave coordinated trunk, the location data of the intersections on the green-wave coordinated trunk, and the trajectory data of the vehicle running on the green-wave coordinated trunk.

In S303, in response to the vehicle passing condition at the downstream intersection being that vehicles needing to wait, at the downstream intersection, to pass exists among vehicles running from the upstream intersection to the downstream intersection, the theoretical value of the intersection stop rate indicator and/or the theoretical value of the road section speed indicator are determined based on the distance between the adjacent intersections, the green-wave coordination speed, and the adjacent-intersection traffic light data in the timing coordination data.

The adjacent-intersection traffic light data includes a first duration in which the traffic light at the upstream intersection of the adjacent intersections is steady green, the second duration in which the traffic light at the downstream intersection of the adjacent intersections is steady green, the phase difference between the traffic lights at the adjacent intersections, and the period of the traffic light at the downstream intersection.

Optionally, in the case where the vehicles needing to wait, at the downstream intersection, to pass exist among the vehicles running from the upstream intersection to the downstream intersection, the time (or orders) the vehicles spend passing through the upstream intersection is different; accordingly, the time the vehicles spend waiting at the downstream intersection to pass is different, and the manners of determining the theoretical value of the intersection stop rate indicator and/or the theoretical value of the road section speed indicator are different.

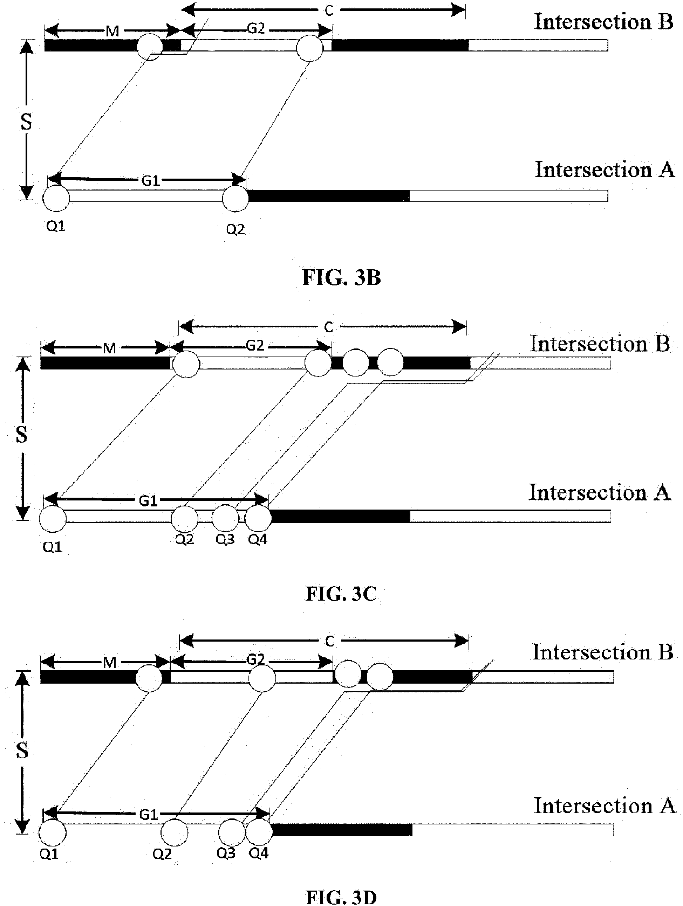

Exemplarily, in the case where among the vehicles running from the upstream intersection to the downstream intersection, the vehicles needing to wait at the downstream intersection to pass are the first n vehicles passing through the upstream intersection after the traffic light at the upstream intersection are steady green (for example, as shown in FIG. 3B, a region of an intersection filled with black indicates a duration in which the traffic light at this intersection is steady red; an unfilled region of this intersection indicates a duration in which the traffic light at this intersection is steady green; for two intersections A and B, the intersection A is the upstream intersection and the intersection B is the downstream intersection; the vehicle Q1 firstly passing through the intersection A needs to wait at the intersection B to pass; the vehicle Q2 lastly passing through the intersection A does not need to wait at the intersection B; and other vehicles (not shown in FIG. 3B) exist between the vehicle Q1 and the vehicle Q2 and do not need to wait when reaching the intersection B), the duration of a red light of the traffic light at the downstream intersection relative to a red light of the traffic light at the upstream intersection is determined based on the phase difference between the traffic lights at the adjacent intersections, the distance between the adjacent intersections, and the green-wave coordination speed. The ratio of the duration of the red light to the first duration is used as the theoretical value of the intersection stop rate indicator.

It is assumed that the speed of the vehicles running on the green-wave coordinated trunk is the green-wave coordination speed V. S denotes the distance between the adjacent intersections. M denotes the phase difference between the traffic lights at the adjacent intersections. G1 denotes the first duration. C denotes the period of the traffic light at the intersection B. Specifically, in this embodiment, the running duration S/V required for any vehicle running from the intersection A to the intersection B is acquired by dividing the distance S between the adjacent intersections to the green-wave coordination speed V. Since the vehicle Q1 needs to wait at the intersection B to pass, it indicates that the phase difference M between the traffic light at the intersection A and the traffic light at the intersection B is greater than the running duration S/V. Accordingly, the duration of the red light M - S/V of the traffic light at the downstream intersection relative to the traffic light at the upstream intersection is acquired by subtracting the running duration S/V from the phase difference M between the traffic light at the intersection A and the traffic light at the intersection B. Then the ratio (M - S/V)/G1 of the acquired duration of the red light to the first duration G1 is used as the theoretical value of the intersection stop rate indicator.

Moreover, in this scenario, the average duration in which the vehicles pass from the upstream intersection through the downstream intersection is determined based on the phase difference between the traffic lights at the adjacent intersections, the distance between the adjacent intersections, the green-wave coordination speed, the period of the traffic light at the downstream intersection, and the first duration. The theoretical value of the road section speed indicator is determined based on the distance between the adjacent intersections and the average duration. In this embodiment, C denotes the period of the traffic light at the downstream intersection.

Specifically, in this embodiment, the running duration S/V required for any vehicle running from the intersection A to the intersection B is acquired by dividing the distance S between the adjacent intersections to the green-wave coordination speed V. Since the vehicle Q1 needs to wait at the intersection B to pass, it indicates that the phase difference M between the traffic light at the intersection A and the traffic light at the intersection B is greater than the running duration S/V. Accordingly, the duration of the red light M - S/V of the traffic light at the downstream intersection relative to the traffic light at the upstream intersection is acquired by subtracting the running duration S/V from the phase difference M between the traffic light at the intersection A and the traffic light at the intersection B. The average duration L1 in which vehicles pass from the intersection A through the intersection B within the duration of the red light is acquired by multiplying ((M - S/V)/2 + S/V) by the theoretical value (M - S/V) of the intersection stop rate indicator. Further, based on the preceding description, it is known that the theoretical value of the intersection stop rate indicator is (M - S/V) and thus that the passing rate at the intersection is 1 - (M - S/V)/G1. Accordingly, the average duration L2 in which vehicles pass from the intersection A through the intersection B within the second duration G2 of the intersection B staying green is acquired by multiplying (1 - (M - S/V)/G1) by S/V Then the theoretical value of the road section speed indicator is acquired by dividing the distance S between the adjacent intersections by the sum of the average durations (L1 and L2).

Further, in the case where among the vehicles running from the upstream intersection to the downstream intersection, the vehicles needing to wait at the downstream intersection to pass are the last n vehicles passing through the upstream intersection after the traffic light at the upstream intersection is steady green (for example, as shown in FIG. 3C, for the two intersections A and B, the intersection A is the upstream intersection and the intersection B is the downstream intersection; the vehicle Q1 passing through the intersection A, the vehicle Q2 passing through the intersection A, and other vehicles (not shown in FIG. 3C) between the vehicle Q1 and the vehicle Q2 may pass through the intersection B directly; and a vehicle Q3 passing through the intersection A, a vehicle Q4 passing through the intersection A, and other vehicles (not shown in FIG. 3C) between the vehicle Q3 and the vehicle Q4 need to wait at the intersection B to pass), the time the last vehicle passing through the upstream intersection spends reaching the downstream intersection is determined based on the first duration, the distance between the adjacent intersections, and the green-wave coordination speed. The duration of the red light of the traffic light at the downstream intersection relative to the red light of the traffic light at the upstream intersection is determined based on the determined time, the second duration, and the phase difference between the traffic lights at the adjacent intersections. The ratio of the duration of the red light to the first duration is used as the theoretical value of the intersection stop rate indicator.

Specifically, the running duration S/V required for any vehicle running from the intersection A to the intersection B is acquired by dividing the distance S between the adjacent intersections to the green-wave coordination speed V. The time the vehicle Q4 (the last vehicle passing through the upstream intersection) spends reaching the intersection B is the second duration G1 plus the running duration S/V. The duration of the red light (G1 + S/V) - G2 - M of the traffic light at the downstream intersection (that is, the traffic light at the intersection B) relative to the traffic light at the upstream intersection (that is, the traffic light at the intersection A) is acquired by subtracting the second duration G2 and the phase difference M between the traffic light at the intersection A and the traffic light at the intersection B from the determined time G1 + S/V. Then the ratio (G1 + S/V) - G2 - M)/G1 of the acquired duration of the red light to the first duration G1 is used as the theoretical value of the intersection stop rate indicator.

Moreover, in this scenario, the average duration in which the vehicles pass from the upstream intersection through the downstream intersection is determined based on the phase difference M between the traffic lights at the adjacent intersections, the distance S between the adjacent intersections, the green-wave coordination speed V, the period C of the traffic light at the downstream intersection, and the first duration G1. The theoretical value of the road section speed indicator is determined based on the distance S between the adjacent intersections and the average duration.

Specifically, the running duration S/V required for any vehicle running from the intersection A to the intersection B is acquired by dividing the distance S between the adjacent intersections to the green-wave coordination speed V. Since the vehicle Q1 does not need to wait at the intersection B to pass, it indicates that the phase difference M between the traffic light at the intersection A and the traffic light at the intersection B is smaller than the running duration S/V That is, the running duration required for the vehicle Q1 running from the intersection A to the intersection B is the time for the vehicle Q1 reaching the intersection B. The duration in which no vehicle may pass through after the intersection B is steady green is acquired by using the running duration S/V - M of the vehicle Q1. Moreover, the duration C - (S/V - M) in which all the vehicles reaching the intersection B from the intersection A pass through the intersection B is acquired by subtracting the calculated duration S/V - M from the period C of the traffic light at the downstream intersection. Further, the average duration (C - (S/V - M) + G1)/2 in which the vehicles pass from the upstream intersection through the downstream intersection is acquired by averaging the sum of the first duration G1 and the duration C - (S/V - M) in which all the vehicles reaching the intersection B from the intersection A pass through the intersection B. Then the theoretical value S/((C - (S/V - M) + G1)/2) of the road section speed indicator is acquired by diving the distance S between the adjacent intersections by the average duration (C - (S/V - M) + G1)/2.

Exemplarily, in the case where among the vehicles running from the upstream intersection to the downstream intersection, the vehicles needing to wait at the downstream intersection to pass are the first n vehicles and last n vehicles passing through the upstream intersection after the traffic light at the upstream intersection is steady green (for example, as shown in FIG. 3D, for the two intersections A and B, the intersection A is the upstream intersection and the intersection B is the downstream intersection; the vehicle Q1 firstly passing through the intersection A needs to wait at the intersection B to pass; the vehicle Q3 passing through the intersection A, the vehicle Q4 passing through the intersection A, and other vehicles (not shown in FIG. 3D) between the vehicle Q3 and the vehicle Q4 need to wait at the intersection B to pass; and the vehicle Q2 passing through the intersection A, other vehicles (not shown in FIG. 3D) between the vehicle Q1 and the vehicle Q2, and other vehicles (not shown in FIG. 3D) between the vehicle Q2 and the vehicle Q3 may pass through the intersection B directly), the green light passing rate G2/G1 at the intersection is acquired by dividing the second duration G2 by the first duration G1. Then the theoretical value of the intersection stop rate indicator is acquired by subtracting G2/G1 from 1.

Moreover, in this scenario, the average duration in which the vehicles pass from the upstream intersection through the downstream intersection is determined based on the phase difference between the traffic lights at the adjacent intersections, the distance between the adjacent intersections, the green-wave coordination speed, the period of the traffic light at the downstream intersection, and the first duration. The theoretical value of the road section speed indicator is determined based on the distance between the adjacent intersections and the average duration.

Specifically, the running duration S/V required for any vehicle running from the intersection A to the intersection B is acquired by dividing the distance S between the adjacent intersections to the green-wave coordination speed V. Since the vehicle Q1 needs to wait at the intersection B to pass, it indicates that the phase difference M between the traffic light at the intersection A and the traffic light at the intersection B is greater than the running duration S/V. Accordingly, the duration of the red light M - S/V of the traffic light at the downstream intersection relative to the traffic light at the upstream intersection is acquired by subtracting the running duration S/V from the phase difference M between the traffic light at the intersection A and the traffic light at the intersection B. The duration C + (M - S/V) in which all the vehicles reaching the intersection B from the intersection A pass through the intersection B is acquired by adding the period C of the traffic light at the downstream intersection to the duration of the red light M - S/V. Further, the average duration (C + (M - S/V) + G1)/2 in which the vehicles running from the upstream intersection to the downstream intersection pass through the downstream intersection is acquired by averaging the sum of the first duration G1 and the duration C + (M - S/V) in which all the vehicles reaching the intersection B from the intersection A pass through the intersection B. Then the theoretical value S/((C + (M - S/V) + G1)/2) of the road section speed indicator is acquired by diving the distance S between the adjacent intersections by the average duration (C + (M - S/V) + G1)/2.

It is to be noted that for each intersection on the green-wave coordinated trunk, the theoretical value of the intersection stop rate indicator can be determined by selecting a corresponding manner based on the vehicle passing condition at the intersection. Further, since the intersection stop rate is based on the passing condition for vehicles running from an upstream intersection to a downstream intersection, the intersection stop rate indicator on the green-wave coordinated trunk may be ignored in the case where the green-wave coordinated trunk is a one-way trunk. Moreover, the green-wave coordination speed is ideal. If the green-wave coordination speed is directed compared with the actual speed (that is, the actual value of the road section speed indicator), the accuracy of determining the reasonability of the timing coordination data is relatively low. The present disclosure combines a plurality of scenarios possibly existing in actual scenarios. The theoretical value of the road section speed indicator is determined based on multi-dimensional data including the data of green-wave coordination, the distance between the adjacent intersections, and the timing coordination data. Moreover, the determined theoretical value is compared with the acquired actual value. Accordingly, the reasonability of the timing coordination data can be determined truthfully and accurately from the perspective of speed. Additionally, through combining a plurality of scenarios possibly existing in actual scenarios, this embodiment provides a plurality of manners for calculating the theoretical value of the intersection stop rate indicator, greatly expanding the usage scenarios of the solutions and enabling the reasonability of the timing coordination data to be analyzed thoroughly from the perspective of intersections.

In S304, the reasonability of the timing coordination data of the intersection traffic light on the green-wave coordinated trunk is verified based on the theoretical value of the intersection stop rate indicator and the actual value of the intersection stop rate indicator and/or the theoretical value of the road section speed indicator and the actual value of the road section speed indicator.

According to the technical solutions provided in embodiments of the present disclosure, through introducing the vehicle passing condition at a downstream intersection, the theoretical value of the intersection stop rate indicator and the theoretical value of road section speed indicator are determined based on multi-dimensional data including the data of green-wave coordination, the distance between the adjacent intersections, and the timing coordination data. Accordingly, an optional manner for the theoretical value of the intersection stop rate indicator and the theoretical value of the road section speed indicator is provided, thus providing data support for subsequently verifying the reasonability of the timing coordination data. Moreover, the timing coordination data is analyzed from the perspective of intersections so that an unreasonable phenomenon of a specific intersection can be positioned directly, facilitating targeted adjustment and enhancing adjustment efficiency.

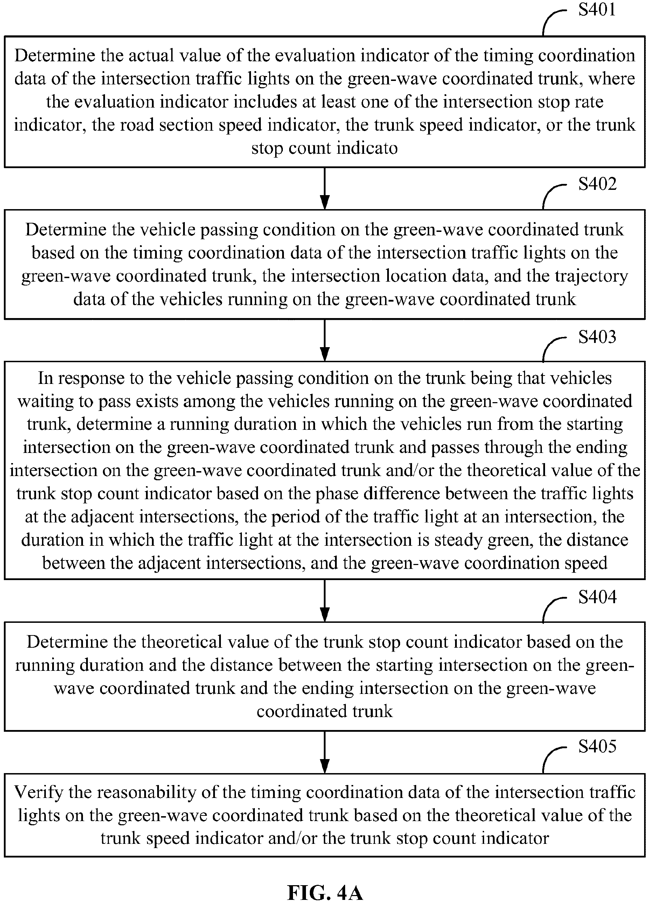

FIG. 4A is a flowchart of another data verification method according to embodiments of the present disclosure. Based on the preceding embodiments, embodiments of the present disclosure make further descriptions on how to determine the theoretical value of the evaluation indicator. As shown in FIG. 4A, the data verification method provided in this embodiment may include the steps below.

In S401, the actual value of the evaluation indicator of the timing coordination data of the intersection traffic lights on the green-wave coordinated trunk is determined. The evaluation indicator includes at least one of the intersection stop rate indicator, the road section speed indicator, the trunk speed indicator, or the trunk stop count indicator.

In S402, the vehicle passing condition on the green-wave coordinated trunk is determined based on the timing coordination data of the intersection traffic lights on the green-wave coordinated trunk, the location data of the intersections on the green-wave coordinated trunk, and the trajectory data of the vehicle running on the green-wave coordinated trunk.

In S403, in response to the vehicle passing condition on the trunk being that vehicles waiting to pass exists among the vehicles running on the green-wave coordinated trunk, a running duration in which the vehicles run from the starting intersection on the green-wave coordinated trunk and passes through an ending intersection on the green-wave coordinated trunk and/or the theoretical value of the trunk stop count indicator are determined based on the phase difference between the traffic lights at the adjacent intersections, the period of the traffic light at an intersection, the duration in which the traffic light at the intersection is steady green, the distance between the adjacent intersections, and the green-wave coordination speed.

Specifically, for each vehicle running from the starting intersection on the green-wave coordinated trunk and passing through the ending intersection on the green-wave coordinated trunk, the running duration in which the vehicle runs from the starting intersection on the green-wave coordinated trunk and passes through the ending intersection on the green-wave coordinated trunk is determined based on the phase difference M between the traffic lights at the adjacent intersections, the period C of the traffic light at an intersection, the duration L in which the traffic light at the intersection is steady green, the distance S between the adjacent intersections, and the green-wave coordination speed V.

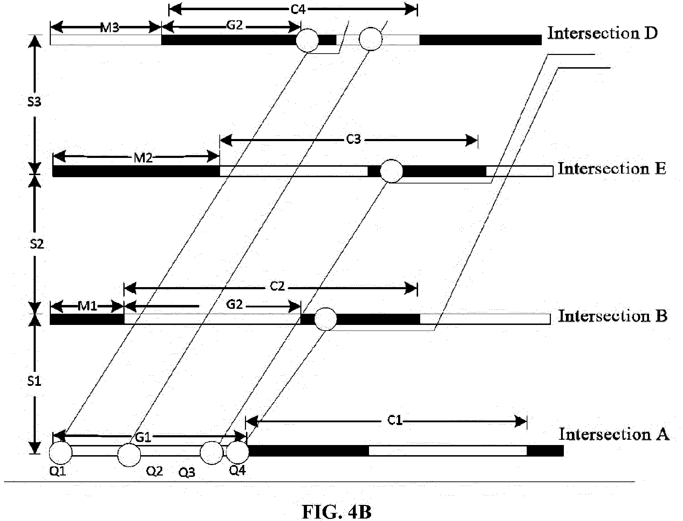

For example, as shown in FIG. 4B, a total of four intersections (that is, an intersection A, an intersection B, an intersection E, and an intersection D) are on the green-wave coordinated trunk. The starting intersection is the intersection A, and the ending intersection is the intersection D. M1 denotes the phase difference between the traffic light at the intersection A and the traffic light at the intersection B. M2 denotes the phase difference between the traffic light at the intersection B and the traffic light at the intersection E. M3 denotes the phase difference between the traffic light at the intersection E and the traffic light at the intersection D. G1 denotes the duration in which the traffic light at the intersection A is steady green. G2 denotes the duration in which the traffic light at the intersection B is steady green. G3 denotes the duration in which the traffic light at the intersection E is steady green. G4 denotes the duration in which the traffic light at the intersection D is steady green. C1 denotes the period of the traffic light at the intersection A. C2 denotes the period of the traffic light at the intersection B. C3 denotes the period of the traffic light at the intersection E. C4 denotes the period of the traffic light at the intersection D. S1 denotes the distance between the intersection A and the intersection B. S2 denotes the distance between the intersection B and the intersection E. S3 denotes the distance between the intersection E and the intersection D.

For the vehicle Q1, the duration L1 in which the vehicle Q1 passes from the intersection A through the intersection B is acquired by dividing S1 by the green-wave coordination speed V; the duration L2 in which the vehicle Q1 passes from the intersection B through the intersection E is acquired by dividing S2 by the green-wave coordination speed V; the duration L3 in which the vehicle Q1 reaches the intersection D from the intersection E is acquired by dividing S3 by the green-wave coordination speed V; and the duration L4 in which the vehicle Q1 passes from the intersection E through the intersection D is determined in combination with, for example, the period C4 of the traffic light at the intersection D, the duration G4 in which the traffic light at the intersection D is steady green, and the duration L3 in which the vehicle Q1 reaches the intersection D from the intersection E. Thus the running duration in which the vehicle Q1 passes from the intersection A through the intersection D is acquired by adding L1, L2, and L4.

For the vehicle Q2, the duration L5 in which the vehicle Q2 passes from the intersection A through the intersection B is acquired by dividing S1 by the green-wave coordination speed V; the duration L6 in which the vehicle Q2 passes from the intersection B through the intersection E is acquired by dividing S2 by the green-wave coordination speed V; and the duration L7 in which the vehicle Q1 passes from the intersection E through the intersection D is acquired by dividing S3 by the green-wave coordination speed V. Thus the running duration in which the vehicle Q2 passes from the intersection A through the intersection D is acquired by adding L5, L6, and L7.

Further, for the vehicle Q3, the running duration in which the vehicle Q3 runs from the intersection A and passes through the intersection D is determined in combination of the green-wave coordination speed V, the phase difference M1 between the traffic light at the intersection A and the traffic light at the intersection B, the phase difference M2 between the traffic light at the intersection B and the traffic light at the intersection E, the phase difference M3 between the traffic light at the intersection E and the traffic light at the intersection D, the duration G2 in which the traffic light at the intersection B is steady green, the duration G3 in which the traffic light at the intersection E is steady green, the duration G4 in which the traffic light at the intersection D is steady green, the period C2 of the traffic light at the intersection B, the period C3 of the traffic light at the intersection E, the period C4 of the traffic light at the intersection D, the distance S1 between the intersection A and the intersection B, the distance S2 between the intersection B and the intersection E, and the distance S3 between the intersection E and the intersection D.

Specifically, in an optional embodiment, for each vehicle running from the starting intersection on the green-wave coordinated trunk and passing through the ending intersection on the green-wave coordinated trunk, the stops for a vehicle running from the starting intersection on the green-wave coordinated trunk and passing through the ending intersection on the green-wave coordinated trunk may be determined based on the phase difference M between the traffic lights at the adjacent intersections, the period C of the traffic light at an intersection, the duration L in which the traffic light at the intersection is steady green, the distance S between the adjacent intersections, and the green-wave coordination speed V. For example, the running duration in which the vehicle runs from the upstream intersection of two adjacent intersections to the downstream intersection of two adjacent intersections is determined based on the green-wave coordination speed and the distance between the adjacent intersections. Later, based on the determined running duration, the duration in which the traffic light at the upstream intersection is steady green, the duration in which the traffic light at the downstream intersection is steady green, and the phase difference between the traffic lights at the adjacent intersections, it is judged whether the traffic light at the downstream intersection is steady green when the vehicle reaches the downstream intersection. If the traffic light does not stay green, it is determined that the vehicle needs to stop and wait at the downstream intersection. In this case, the number of stops for the vehicle is plus 1. The preceding process is repeated before the number of stops for the vehicle passing from the starting intersection on the green-wave coordinated trunk through the ending intersection on the green-wave coordinated trunk is counted.

Further, after the number of stops for each vehicle running from the starting intersection on the green-wave coordinated trunk and passing through the ending intersection on the green-wave coordinated trunk is acquired, the numbers of stops for all the vehicles are averaged. The average value is taken as the theoretical value of the trunk stop count indicator.

In S404, the theoretical value of the trunk stop count indicator is determined based on the running duration and the distance between the starting intersection on the green-wave coordinated trunk and the ending intersection on the green-wave coordinated trunk.

In this embodiment, the distance between the starting intersection and the ending intersection may be determined by the location data of the starting intersection and the location data of the ending intersection and may further be acquired directly from the map application, which is not limited in this embodiment.

Specifically, for each vehicle running from the starting intersection on the green-wave coordinated trunk to the ending intersection on the green-wave coordinated trunk, after the running duration of a vehicle is determined, the speed at which the vehicle runs on the green-wave coordinated trunk is acquired by dividing the distance between the starting intersection on the green-wave coordinated trunk and the ending intersection on the green-wave coordinated trunk by the running duration of the vehicle.

Further, after the speed at which each vehicle runs on the green-wave coordinated trunk is acquired, the speeds of all the vehicles are averaged. The average value is taken as the theoretical value of the trunk speed indicator.

In S405, the reasonability of the timing coordination data of the intersection traffic lights on the green-wave coordinated trunk is verified based on the theoretical value of the trunk speed indicator and/or the trunk stop count indicator.

According to the technical solutions provided in embodiments of the present disclosure, through introducing the vehicle passing condition on the trunk, the theoretical value of the trunk stop count indicator and the theoretical value of the trunk speed indicator are determined based on various types of data including the data of green-wave coordination, the distance between the adjacent intersections, and the timing coordination data. Accordingly, an optional manner for the theoretical value of the trunk stop count indicator and the theoretical value of the trunk speed indicator is provided, thus providing data support for subsequently verifying the reasonability of the timing coordination data.

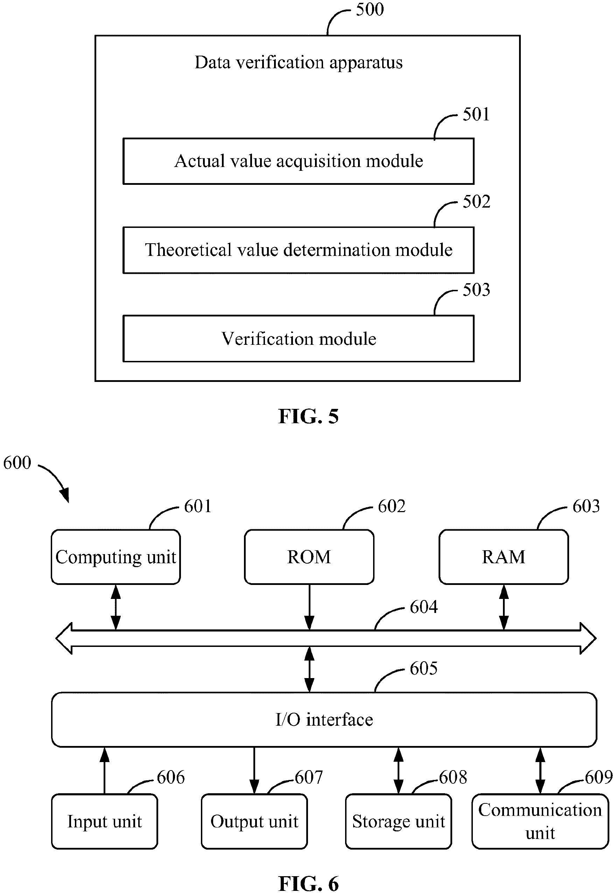

FIG. 5 is a diagram illustrating the structure of a data verification apparatus according to embodiments of the present disclosure. The apparatus can implement the data verification method of embodiments of the present disclosure. The apparatus can be integrated into a computing device carrying the function of data verification. The data verification apparatus 500 specifically includes an actual value determination module 501, a theoretical value determination module 502, and a verification module 503.

The actual value determination module 501 is configured to determine the actual value of an evaluation indicator of the timing coordination data of intersection traffic lights on a green-wave coordinated trunk. The evaluation indicator includes at least one of an intersection stop rate indicator, a road section speed indicator, a trunk speed indicator, or a trunk stop count indicator.

The theoretical value determination module 502 is configured to determine the theoretical value of the evaluation indicator based on the timing coordination data of the intersection traffic lights on the green-wave coordinated trunk, location data of intersections on the green-wave coordinated trunk, and the trajectory data of vehicle running on the green-wave coordinated trunk.

The verification module 503 is configured to verify the reasonability of the timing coordination data of the intersection traffic lights on the green-wave coordinated trunk based on the theoretical value of the evaluation indicator and the actual value of the evaluation indicator.

According to the technical solutions provided in embodiments of the present disclosure, the theoretical value of the evaluation indicator is determined based on the timing coordination data of the intersection traffic lights on the green-wave coordinated trunk, the location data of the intersections on the green-wave coordinated trunk, and the trajectory data of the vehicle running on the green-wave coordinated trunk. Moreover, the reasonability of the timing coordination data of the intersection traffic lights on the green-wave coordinated trunk is verified based on the theoretical value of the evaluation indicator and the acquired actual value of the evaluation indicator. In the preceding solution, the timing coordination data is evaluated thoroughly from three perspectives, intersections, road sections, and the trunk so as to determine the reasonability of the timing coordination data of the intersection traffic lights intuitively, truthfully, and accurately. Moreover, this solution is based on the trajectory data of all the vehicles running on the green-wave coordinated trunk, that is, based on an abundant amount of data, which greatly improves the accuracy of determining the reasonability of the timing coordination data of the intersection traffic lights and provides an optimized new idea of verifying the reasonability of the timing coordination data

Exemplarily, the theoretical value determination module 502 includes a passing condition determination unit and a theoretical value determination unit.

The passing condition determination unit is configured to determine the vehicle passing condition at a downstream intersection of adjacent intersections on the green-wave coordinated trunk and/or the vehicle passing condition on the green-wave coordinated trunk based on the timing coordination data of the intersection traffic lights on the green-wave coordinated trunk, location data of intersections on the green-wave coordinated trunk, and the trajectory data of the vehicle running on the green-wave coordinated trunk.

The theoretical value determination unit is configured to determine the theoretical value of the evaluation indicator based on the vehicle passing condition at the downstream intersection and/or the vehicle passing condition on the trunk, the green-wave coordination speed, the timing coordination data, and the distance between the adjacent intersections.

Exemplarily, the theoretical value determination unit is specifically configured to, in response to the vehicle passing condition at the downstream intersection being that vehicles needing to wait, at the downstream intersection, to pass exists among vehicles running from the upstream intersection to the downstream intersection, determine the theoretical value of the intersection stop rate indicator and/or the theoretical value of the road section speed indicator based on the distance between the adjacent intersections, the green-wave coordination speed, and the adjacent-intersection traffic light data in the timing coordination data.

The adjacent-intersection traffic light data includes a first duration in which the traffic light at the upstream intersection of the adjacent intersections is steady green, a second duration in which the traffic light at the downstream intersection of the adjacent intersections is steady green, the phase difference between the traffic lights at the adjacent intersections, and the period of the traffic light at the downstream intersection.

Exemplarily, the theoretical value determination unit is specifically configured to determine, based on the first duration, the distance between the adjacent intersections, and the green-wave coordination speed, the time the last vehicle passing through the upstream intersection spends reaching the downstream intersection; determine a duration of the red light of the traffic light at the downstream intersection relative to the traffic light at the upstream intersection based on the determined time, the second duration, and the phase difference between the traffic lights at the adjacent intersections; and use a ratio of the duration of the red light to the first duration as the theoretical value of the intersection stop rate indicator.

Exemplarily, the theoretical value determination unit is specifically configured to determine a duration of a red light of the traffic light at the downstream intersection relative to a red light of the traffic light at the upstream intersection based on the phase difference between the traffic lights at the adjacent intersections, the distance between the adjacent intersections, and the green-wave coordination speed and use a ratio of the duration of the red light to the first duration as the theoretical value of the intersection stop rate indicator.

Exemplarily, the theoretical value determination unit is specifically configured to determine an average duration in which the vehicles pass from the upstream intersection through the downstream intersection based on the phase difference between the traffic lights at the adjacent intersections, the distance between the adjacent intersections, the green-wave coordination speed, the period of the traffic light at the downstream intersection, and the first duration and determine the theoretical value of the road section speed indicator based on the distance between the adjacent intersections and the average duration.

Exemplarily, the theoretical value determination unit is specifically configured to, in response to the vehicle passing condition on the trunk being that vehicles waiting to pass exists among the vehicles running on the green-wave coordinated trunk, determine a running duration in which the vehicles run from the starting intersection on the green-wave coordinated trunk and passes through an ending intersection on the green-wave coordinated trunk and/or the theoretical value of the trunk stop count indicator based on the phase difference between the traffic lights at the adjacent intersections, the period of the traffic light at an intersection, the duration in which the traffic light at the intersection is steady green, the distance between the adjacent intersections, and the green-wave coordination speed; and determine the theoretical value of the trunk stop count indicator based on the running duration and the distance between the starting intersection on the green-wave coordinated trunk and the ending intersection on the green-wave coordinated trunk.

It is to be noted that in this embodiment, an execution subject of the data verification method can obtain the data (for example, the trajectory data of the vehicles) used for data verification in embodiments of the present disclosure in various public, legal and compliant manners. For example, the data may be obtained from a public data set or obtained from a user through the user's authorization.

According to the embodiments of the present disclosure, the present disclosure further provides an electronic device, a readable storage medium, and a computer program product.

FIG. 6 is a block diagram of an exemplary electronic device 600 that may be configured to implement the embodiments of the present disclosure. Electronic devices are intended to represent various forms of digital computers, for example, laptop computers, desktop computers, worktables, personal digital assistants, servers, blade servers, mainframe computers, and other applicable computers. Electronic devices may further represent various forms of mobile apparatuses, for example, personal digital assistants, cellphones, smartphones, wearable devices, and other similar computing apparatuses. Herein the shown components, the connections and relationships between these components, and the functions of these components are illustrative only and are not intended to limit the implementation of the present disclosure as described and/or claimed herein.

As shown in FIG. 6, the device 600 includes a computing unit 601. The computing unit 602 may perform various appropriate actions and processing according to a computer program stored in a read-only memory (ROM) 602 or a computer program loaded into a random-access memory (RAM) 603 from a storage unit 608. Various programs and data required for the operation of the electronic device 600 are also stored in the RAM 603. The computing unit 601, the ROM 602, and the RAM 603 are connected to each other through a bus 604. An input/output (I/O) interface 605 is also connected to the bus 604.

Multiple components in the electronic device 600 are connected to the I/O interface 605. The multiple components include an input unit 606 such as a keyboard and a mouse, an output unit 607 such as various types of displays and speakers, the storage unit 608 such as a magnetic disk and an optical disk, and a communication unit 609 such as a network card, a modem, and a wireless communication transceiver. The communication unit 609 allows the device 600 to exchange information/data with other devices over a computer network such as the Internet and/or various telecommunications networks.

The computing unit 601 may be various general-purpose and/or special-purpose processing components having processing and computing capabilities. Examples of the computing unit 601 include, but are not limited to, a central processing unit (CPU), a graphics processing unit (GPU), a special-purpose artificial intelligence (AI) computing chip, a computing unit executing machine learning models and algorithms, a digital signal processor (DSP) and any appropriate processor, controller, and microcontroller. The computing unit 601 performs the preceding methods and processing, such as a data verification method. For example, in some embodiments, the data verification method may be implemented as a computer software program tangibly contained in a machine-readable medium such as the storage unit 608. In some embodiments, part or all of computer programs may be loaded and/or installed on the electronic device 600 via the ROM 602 and/or the communication unit 609. When the computer program is loaded to the RAM 603 and executed by the computing unit 601, one or more steps of the preceding data verification method may be executed. Alternatively, in other embodiments, the computing unit 601 may be configured, in any other suitable manner (for example, by means of firmware), to perform the data verification method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting the data and instructions to the memory system, the at least one input apparatus, and the at least one output apparatus.

Program codes for implementing the methods of the present disclosure may be compiled in any combination of one or more programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed in whole on a machine, executed in part on a machine, executed, as a stand-alone software package, in part on a machine, and in part on a remote machine, or executed in whole on a remote machine or a server.

In the context of the present disclosure, a machine-readable medium may be a tangible medium that may include or store a program that is used by or in conjunction with a system, apparatus or device that executes instructions. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disk read-only memory (CD-ROM), an optical memory device, a magnetic memory device, or any suitable combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. The clients and servers are usually far away from each other and generally interact through the communication network. The relationship between the clients and the servers arises by virtue of computer programs running on respective computers and having a client-server relationship to each other. The server may be a cloud server, also referred to as a cloud computing server or a cloud host. As a host product in a cloud computing service system, the server solves the defects of difficult management and weak business scalability in conventional physical hosts and VPS services.

It is to be understood that various forms of the preceding flows may be used, with steps reordered, added, or removed. For example, the steps described in the present disclosure may be executed in parallel, in sequence, or in a different order as long as the desired result of the technical solutions disclosed in the present disclosure is achieved. The execution sequence of these steps is not limited herein.

## Claims

1. A data verification method, comprising:
determining (S101, S201, S301, S401) an actual value of an evaluation indicator of timing coordination data of intersection traffic lights on a green-wave coordinated trunk, wherein the evaluation indicator comprises at least one of an intersection stop rate indicator, a road section speed indicator, a trunk speed indicator, or a trunk stop count indicator;
determining (S102) a theoretical value of the evaluation indicator based on the timing coordination data of the intersection traffic lights on the green-wave coordinated trunk, location data of intersections on the green-wave coordinated trunk, and trajectory data of a vehicle running on the green-wave coordinated trunk; and
verifying (S103, S204, S304, S405) reasonability of the timing coordination data of the intersection traffic lights on the green-wave coordinated trunk based on the theoretical value of the evaluation indicator and the actual value of the evaluation indicator.

2. The method according to claim 1, wherein determining (SI02) the theoretical value of the evaluation indicator based on the timing coordination data of the intersection traffic lights on the green-wave coordinated trunk, the location data of the intersections on the green-wave coordinated trunk, and the trajectory data of the vehicles running on the green-wave coordinated trunk comprises:
determining (S202, S302, S402) at least one of a vehicle passing condition at a downstream intersection of adjacent intersections on the green-wave coordinated trunk or a vehicle passing condition on the green-wave coordinated trunk based on the timing coordination data of the intersection traffic lights on the green-wave coordinated trunk, the location data of the intersections on the green-wave coordinated trunk, and the trajectory data of the vehicles running on the green-wave coordinated trunk; and
determining (S203) the theoretical value of the evaluation indicator based on a green-wave coordination speed, the timing coordination data, a distance between the adjacent intersections, and the at least one of the vehicle passing condition at the downstream intersection or the vehicle passing condition on the green-wave coordinated trunk.

3. The method according to claim 2, wherein determining (S203) the theoretical value of the evaluation indicator based on the vehicle passing condition at the downstream intersection, the green-wave coordination speed, the timing coordination data, and the distance between the adjacent intersections comprises:
in response to the vehicle passing condition at the downstream intersection being that a vehicle needing to wait, at the downstream intersection, to pass exists among vehicles running from an upstream intersection of the adjacent intersections to the downstream intersection, determining (S303) at least one of the theoretical value of the intersection stop rate indicator or the theoretical value of the road section speed indicator based on the distance between the adjacent intersections, the green-wave coordination speed, and adjacent-intersection traffic light data in the timing coordination data, wherein
the adjacent-intersection traffic light data comprises a first duration in which a traffic light at the upstream intersection of the adjacent intersections is steady green, a second duration in which a traffic light at the downstream intersection of the adjacent intersections is steady green, a phase difference between traffic lights at the adjacent intersections, and a period of the traffic light at the downstream intersection.

4. The method according to claim 3, wherein determining the theoretical value of the intersection stop rate indicator based on the distance between the adjacent intersections, the green-wave coordination speed, and the adjacent-intersection traffic light data in the timing coordination data comprises:
determining, based on the first duration, the distance between the adjacent intersections, and the green-wave coordination speed, time a last vehicle passing through the upstream intersection spends reaching the downstream intersection;
determining a duration of a red light of the traffic light at the downstream intersection relative to a red light of the traffic light at the upstream intersection based on the determined time, the second duration, and the phase difference between the traffic lights at the adjacent intersections; and
using a ratio of the duration of the red light to the first duration as the theoretical value of the intersection stop rate indicator.

5. The method according to claim 3, wherein determining the theoretical value of the intersection stop rate indicator based on the distance between the adjacent intersections, the green-wave coordination speed, and the adjacent-intersection traffic light data in the timing coordination data comprises:
determining a duration of a red light of the traffic light at the downstream intersection relative to a red light of the traffic light at the upstream intersection based on the phase difference between the traffic lights at the adjacent intersections, the distance between the adjacent intersections, and the green-wave coordination speed; and
using a ratio of the duration of the red light to the first duration as the theoretical value of the intersection stop rate indicator.

6. The method according to claim 3, wherein determining the theoretical value of the road section speed indicator based on the distance between the adjacent intersections, the green-wave coordination speed, and the adjacent-intersection traffic light data in the timing coordination data comprises:
determining an average duration in which the vehicles pass from the upstream intersection through the downstream intersection based on the phase difference between the traffic lights at the adjacent intersections, the distance between the adjacent intersections, the green-wave coordination speed, the period of the traffic light at the downstream intersection, and the first duration; and
determining the theoretical value of the road section speed indicator based on the distance between the adjacent intersections and the average duration.

7. The method according to claim 2, wherein determining (S203) the theoretical value of the evaluation indicator based on the vehicle passing condition on the green-wave coordinated trunk, the green-wave coordination speed, the timing coordination data, and the distance between the adjacent intersections comprises:
in response to the vehicle passing condition on the trunk being that a vehicle waiting to pass exists among the vehicles running on the green-wave coordinated trunk, determining (S403) at least one of a running duration in which the vehicle runs from a starting intersection on the green-wave coordinated trunk and passes through an ending intersection on the green-wave coordinated trunk or the theoretical value of the trunk stop count indicator based on a phase difference between traffic lights at the adjacent intersections, a period of a traffic light at an intersection, a duration in which the traffic light at the intersection is steady green, the distance between the adjacent intersections, and the green-wave coordination speed; and
determining (S404) the theoretical value of the trunk stop count indicator based on the running duration and a distance between the starting intersection on the green-wave coordinated trunk and the ending intersection on the green-wave coordinated trunk.

8. A data verification apparatus, comprising:
an actual value determination module (501) configured to determine an actual value of an evaluation indicator of timing coordination data of intersection traffic lights on a green-wave coordinated trunk, wherein the evaluation indicator comprises at least one of an intersection stop rate indicator, a road section speed indicator, a trunk speed indicator, or a trunk stop count indicator;
a theoretical value determination module (502) configured to determine a theoretical value of the evaluation indicator based on the timing coordination data of the intersection traffic lights on the green-wave coordinated trunk, location data of intersections on the green-wave coordinated trunk, and trajectory data of a vehicle running on the green-wave coordinated trunk; and
a verification module (503) configured to verify reasonability of the timing coordination data of the intersection traffic lights on the green-wave coordinated trunk based on the theoretical value of the evaluation indicator and the actual value of the evaluation indicator.

9. The apparatus according to claim 8, wherein the theoretical value determination module comprises:
a passing condition determination unit configured to determine at least one of a vehicle passing condition at a downstream intersection of adjacent intersections on the green-wave coordinated trunk or a vehicle passing condition on the green-wave coordinated trunk based on the timing coordination data of the intersection traffic lights on the green-wave coordinated trunk, the location data of the intersections on the green-wave coordinated trunk, and the trajectory data of the vehicles running on the green-wave coordinated trunk; and
a theoretical value determination unit configured to determine the theoretical value of the evaluation indicator based on a green-wave coordination speed, the timing coordination data, a distance between the adjacent intersections, and the at least one of the vehicle passing condition at the downstream intersection or the vehicle passing condition on the trunk.

10. The apparatus according to claim 9, wherein the theoretical value determination unit is specifically configured to:
in response to the vehicle passing condition at the downstream intersection being that a vehicle needing to wait, at the downstream intersection, to pass exists among vehicles running from an upstream intersection of the adjacent intersections to the downstream intersection, determine at least one of the theoretical value of the intersection stop rate indicator or the theoretical value of the road section speed indicator based on the distance between the adjacent intersections, the green-wave coordination speed, and adjacent-intersection traffic light data in the timing coordination data, wherein
the adjacent-intersection traffic light data comprises a first duration in which a traffic light at the upstream intersection of the adjacent intersections is steady green, a second duration in which a traffic light at the downstream intersection of the adjacent intersections is steady green, a phase difference between traffic lights at the adjacent intersections, and a period of the traffic light at the downstream intersection.

11. The apparatus according to claim 10, wherein the theoretical value determination unit is specifically configured to:
determine, based on the first duration, the distance between the adjacent intersections, and the green-wave coordination speed, time a last vehicle passing through the upstream intersection spends reaching the downstream intersection
determine a duration of a red light of the traffic light at the downstream intersection relative to a red light of the traffic light at the upstream intersection based on the determined time, the second duration, and the phase difference between the traffic lights at the adjacent intersections; and
use a ratio of the duration of the red light to the first duration as the theoretical value of the intersection stop rate indicator.

12. The apparatus according to claim 10, wherein the theoretical value determination unit is specifically configured to:
determine a duration of a red light of the traffic light at the downstream intersection relative to a red light of the traffic light at the upstream intersection based on the phase difference between the traffic lights at the adjacent intersections, the distance between the adjacent intersections, and the green-wave coordination speed; and
use a ratio of the duration of the red light to the first duration as the theoretical value of the intersection stop rate indicator.

13. An electronic device, comprising:
at least one processor; and
a memory communicatively connected to the at least one processor;
wherein the memory stores instructions executable by the at least one processor, and the instructions are executed by the at least one processor to cause the at least one processor to execute the data verification method according to any one of claims 1 to 7.

14. A non-transitory computer-readable storage medium storing computer instructions, wherein the computer instructions are configured to cause a computer to execute the data verification method according to any one of claims 1 to 7.

15. A computer program product, comprising a computer program wherein the computer program is configured to, when executed by a processor, cause the processor to implement the data verification method according to any one of claims 1 to 7.
